# EUROPÄISCHE PATENTSCHRIFT

(11) **EP 4 416 838 B1**
(45) Veröffentlichungstag und Bekanntmachung des Hinweises auf die Patenterteilung: **01.10.2025**
(21) Anmeldenummer: 22801396.7
(22) Anmeldetag: 07.10.2022
(51) Int. Cl.: H02S 50/10

(54) **ELEKTRONISCHE SCHALTUNG FÜR EIN PHOTOVOLTAIK-MODUL UND VERFAHREN ZUM ZUSCHALTEN EINES PHOTOVOLTAIK-MODULS**
ELECTRONIC CIRCUIT FOR A PHOTOVOLTAIC MODULE AND METHOD FOR CONNECTING A PHOTOVOLTAIC MODULE
CIRCUIT ÉLECTRONIQUE POUR MODULE PHOTOVOLTAÏQUE ET PROCÉDÉ DE CONNEXION D'UN MODULE PHOTOVOLTAÏQUE

(30) Priorität: 11.10.2021 DE 102021211448
(43) Veröffentlichungstag der Anmeldung: 21.08.2024
(73) Patentinhaber: Fraunhofer-Gesellschaft zur Förderung der angewandten Forschung e.V., 80686 München (DE)
(72) Erfinder: REICHERT, Stefan, 79110 Freiburg (DE); BORNWASSER, Jörg, 79110 Freiburg (DE); SCHMIDT, Heribert, 79110 Freiburg (DE)
(74) Vertreter: König, Andreas Rudolf
(86) Internationale Anmeldenummer: PCT/EP2022/077954
(87) Internationale Veröffentlichungsnummer: WO 2023/061877

(56) Entgegenhaltungen:
- WO-A1-2021/099085
- DE-A1- 102017 121 788
- US-A1- 2013 320 778

## Beschreibung

Die vorliegende Erfindung bezieht sich auf eine elektronische Schaltung für ein Photovoltaik-Modul, ein Photovoltaik-System, auf ein Fahrzeug mit einem Photovoltaik-System und auf ein Verfahren zum Zuschalten eines Photovoltaik-Moduls in einen Photovoltaik-String. Die vorliegende Erfindung bezieht sich ferner auf eine intelligente Schaltung für Elektroautos zur Auftrennung eines fahrzeuginternen Photovoltaik (PV)-Hochvolt-Strings.

Der Bereich der fahrzeugintegrierten Photovoltaik (VIPV, Vehicle Integrated Photovoltaics) ist durch eine hohe Dynamik gekennzeichnet. Verschiedenste Hersteller bieten mittlerweile Lösungen an. Dabei kann zwischen dem PKW- und Nutzfahrzeuge-Bereich unterschieden werden. Aufgrund der begrenzten Flächen beim PKW und den geltenden Sicherheitsvorschriften haben sich Lösungen mit einer maximalen Photovoltaik (PV)-Spannung von < 60 V (Schutzkleinspannung) durchgesetzt. Die Einhaltung der maximalen Spannung wird dadurch erreicht, dass die PV-Module beziehungsweise PV-Strings parallel verschaltet werden oder ein separater DC/DC-Wandler-Eingang für jedes Modul eingesetzt wird. Im Nutzfahrzeuge-Bereich können aufgrund der großen nutzbaren Dachfläche größere installierbare PV-Leistungen realisiert werden. Bereits bei kleineren LKWs kann von einer Leistung im einstelligen kW-Bereich ausgegangen werden. Um den Verkabelungsaufwand und Kabelquerschnitt zu minimieren, bietet es sich an, die PV-Module in Serie zu verschalten und somit den PV-Strom gering zu halten. Die PV-Spannung übersteigt in diesem Fall jedoch die Schutzkleinspannung.

Während des regulären Betriebs der PV-Module, des DC/DC-Wandlers und des Hochvolt (HV)-Kreises und der HV-Batterie einer PV-Anlage wird die Isolation durch einen ISO-Wächter (Isolations-Wächter) überwacht. Wird jedoch zum Beispiel im Falle eines Unfalls der HV-Kreis aufgetrennt und somit die Batterie abgetrennt, übernimmt der ISO-Wächter keine Schutzfunktion der PV-Seite. Die potenziell gefährliche Spannung der in Serie verschalteten PV-Module (Leerlaufspannung) liegt weiterhin im gesamten PV-Kreis an. Auch während des Trennens der sogenannten Service Disconnect Box liegt eine unterwünscht hohe Spannung im PV-Kreis an. Eine elektronische Schaltung für ein Photovoltaik-Modul aus dem Stand der Technik ist in dem Dokument US 2013/320778 A1 offenbart.

Um das Problem der hohen Spannungen im Bereich der fahrzeugintegrierten Photovoltaik zu vermeiden, wurde bisher auf eine Serienverschaltung der PV-Module und PV-Strings verzichtet beziehungsweise es werden höchstens Serienverschaltungen im Rahmen der Schutzkleinspannungen implementiert. Im Bereich der stationären Photovoltaik sind Lösungen vorhanden, diese nutzen einen Kommunikationskanal zwischen einem zentralen DC/DC-Wandler beziehungsweise Wechselrichter und den einzelnen PV-Modulen per Power Line Kommunikation (PLC).

Wünschenswert wären Konzepte zum einfachen und sicheren Zuschalten von PV-Modulen in einem PV-String.

Eine Aufgabe der vorliegenden Erfindung besteht deshalb darin, eine elektronische Schaltung für ein PV-Modul, eine Photovoltaik-Baugruppe, ein PV-System, ein Fahrzeug mit einem PV-System und ein Verfahren zum Zuschalten eines PV-Moduls zu schaffen, die es ermöglichen, mit geringem Aufwand an Material und Komplexität eine Zuschaltung eines PV-Moduls in einen String zu ermöglichen.

Diese Aufgabe wird durch den Gegenstand der unabhängigen Patentansprüche und 15 gelöst.

Vorteilhafte Weiterbildungen sind in den abhängigen Patentansprüchen definiert.

Ein Kerngedanke der vorliegenden Erfindung besteht darin, erkannt zu haben, dass eine Umkehrung einer Stromflussrichtung in dem PV-String als Informationsgrundlage oder Träger genutzt werden kann, um eine dezentrale elektronische Schaltung dazu anzuregen, das von ihr verwaltete oder an sie angeschlossene PV-Modul wieder mit dem PV-String zu verbinden. Hierdurch wird ermöglicht, dass eine dezentrale Entscheidung über das Ausgliedern des PV-Moduls aus dem PV-String getroffen werden kann, um im Falle unvorhergesehener und/oder vorhergesehener Ereignisse, beispielsweise einem Unfall oder dergleichen, Sicherheitsanforderungen, insbesondere im Hinblick auf die Schutzkleinspannung, zu erreichen. Hierdurch wird es möglich, eine Serienschaltung von PV-Modulen zu implementieren, die im regulären Betrieb hohe Spannungen ermöglicht, im Bedarfsfall aber die jeweilige Spannung reduziert, was ein hohes Maß an Sicherheit bietet. Das Zuschalten vermittels der veränderten Stromrichtung überprüft einerseits, ob der PV-String intakt ist und ermöglicht es ferner auf einen separaten Kommunikationskanal zu verzichten, so dass ein Zuschalten des jeweiligen PV-Moduls in den String risikoarm und gleichzeitig mit geringem Komplexitätsaufwand möglich ist.

Gemäß einem Ausführungsbeispiel umfasst eine elektronische Schaltung für ein PV-Modul PV-Anschlüsse zur Kopplung mit dem PV-Modul und String-Anschlüsse zur Kopplung mit einem PV-String. Zwischen den PV-Anschlüssen und den String-Anschlüssen verläuft ein Strompfad, der ausgebildet ist, um einen in dem PV-Modul erzeugten elektrischen Strom in einer ersten Stromflussrichtung an den PV-String zu leiten. Zwischen zumindest einem der PV-Anschlüsse und zumindest einem der String-Anschlüsse ist eine Trennungseinrichtung angeordnet, die ausgebildet ist, um den Strompfad in einem ersten Zustand entlang der ersten Stromflussrichtung zu unterbrechen und um den Strompfad in einem zweiten Zustand entlang der ersten Stromflussrichtung zu schließen. Die elektronische Schaltung umfasst eine Steuerungseinrichtung, die ausgebildet ist, um eine Stromflussinformation über einen Stromfluss in zumindest einem Teilabschnitt des Strompfades entlang einer zur ersten Stromflussrichtung entgegengesetzten zweiten Stromflussrichtung zu erhalten und um basierend auf der Stromflussinformation die Trennungseinrichtung von dem ersten Zustand in den zweiten Zustand zu steuern.

Gemäß einem Ausführungsbeispiel ist die Trennungseinrichtung so ausgestaltet, dass sie einen Halbleiterschalter mit einem schaltbaren Strompfad und eine parallel zu dem schaltbaren Strompfad wirkenden Body-Diode umfasst. Die Trennungseinrichtung ist ausgebildet, um in dem ersten Zustand der Trennungseinrichtung den Stromfluss über die Body-Diode entlang der zweiten Stromflussrichtung zu leiten. Dies ermöglicht eine einfache und dennoch zuverlässige Implementierung zur Feststellung des Stromflusses in die zweite Stromflussrichtung. Ein Stromfluss durch den Schalterteil des Halbleiterschalter kann aufgrund dessen Ansteuerung verhindert werden während die entlang der zweiten Stromflussrichtung leitfähige Body-Diode entsprechend wirksam ist.

Gemäß einem Ausführungsbeispiel umfasst die Trennungseinrichtung zumindest einen ersten und einen zweiten seriell oder parallel zueinander verschalteten Halbleiterschalter, was zusätzliche Halbleiterschalter nicht ausschließt. Die seriell verschalteten Halbleiterschalter umfassen entlang der zweiten Stromflussrichtung wirkende, das heißt, leitfähige Body-Dioden. Auch eine parallele Verschaltung derartiger Schalter kann entsprechend ausgestaltet sein. Vorteilhaft daran ist, dass diese Body-Dioden ohne relevanten Mehraufwand nutzbar sind und gleichzeitig Halbleiterschalter schnell und zuverlässig schaltbar sind.

Gemäß einem Ausführungsbeispiel umfasst die elektronische Schaltung eine Sensoreinrichtung, die ausgebildet ist, um einen Stromfluss entlang der zweiten Stromflussrichtung zu erkennen; wobei die Stromflussinformation auf dem erkannten Stromfluss basiert. Vorteilhaft daran ist, dass der Stromfluss mit einfachen Mitteln erkennbar ist.

Gemäß einem Ausführungsbeispiel ist die Sensoreinrichtung ausgebildet, um einen Spannungsabfall über einer Body-Diode eines Halbleiterschalters der Trennungseinrichtung zu detektieren, wobei der Spannungsabfall mit dem Stromfluss kausal zusammenhängt. Vorteilhaft daran ist, dass eine Spannung mit einfachen Mitteln erkennbar ist. Auch wenn eine Stromstärke auswertbar ist, können Ausführungsbeispiele bereits aus dem Vorliegen des Spannungsabfalls über der zumindest einen Body-Diode den Stromfluss entlang der zweiten Richtung erkennen, so dass die elektronische Schaltung diese Information für das Zuschalten des PV-Moduls nutzen kann.

Gemäß einem Ausführungsbeispiel umfasst die elektronische Schaltung eine Bypass-Diode, die zwischen die String-Anschlüsse gekoppelt ist, und die ausgebildet ist, um in dem ersten Zustand einen elektrischen Stromfluss in dem String zu ermöglichen. So kann in dem ersten Zustand der Strom des Strings über die Bypass-Diode geleitet werden. Der entgegengesetzt gerichtete Strom entlang der zweiten Stromflussrichtung wird von der Bypass-Diode nicht geleitet beziehungsweise unterdrückt, so dass der Stromfluss, bspw. über die Body-Dioden, entlang der zweiten Stromflussrichtung problemlos erkennbar ist.

Gemäß einem Ausführungsbeispiel ist die Steuerungseinrichtung ausgebildet, um die Trennungseinrichtung von dem zweiten Zustand basierend auf einem Abschaltereignis in den ersten Zustand zu steuern. Als Abschaltereignisse können beispielsweise ein Leerlauf, eine Verschattung und/oder ein String-Kurzschluss betrachtet werden. Gemäß einer möglichen Ausführungsform hiervon kann die Steuerungseinrichtung ausgebildet sein, um das Abschaltereignis als ein in dem PV-Modul oder dem String oder der elektronischen Schaltung verursachtes Abschaltereignis zu erkennen, also ein dezentrales Abschaltereignis. Ein dezentrales Abschalten ist problemlos möglich, da vermittels des Stromflusses entlang der zweiten Stromflussrichtung eine zentral initiierte Zuschaltung zumindest temporär ausgelöst werden kann.

Gemäß einem Ausführungsbeispiel ist die Steuerungseinrichtung ausgebildet, um nach dem erkannten Abschaltereignis, also nach einer erfolgten Trennung, die Trennungseinrichtung abhängig von dem über den String erhaltenen Stromfluss entlang der zweiten Stromflussrichtung in den zweiten Zustand zu steuern. Dies ermöglicht es, zumindest versuchsweise wieder in den zweiten Zustand überzugehen, wodurch die Steuerungseinrichtung überprüfen kann, ob das Abschaltereignis noch vorliegt oder behoben ist, beispielsweise nach einer dauerhaften Verschattung.

Gemäß einem Ausführungsbeispiel ist die Steuerungseinrichtung ausgebildet, um bei einem temporären Leistungseinbruch des PV-Moduls, etwa einer längeren Verschattungssituation, die Trennungseinrichtung temporär in den ersten Zustand zu schalten, und um unabhängig von dem über den String erhaltenen Stromfluss entlang der zweiten Stromflussrichtung in den zweiten Zustand zu steuern, etwa um zu prüfen, ob ein die Abschaltung verursachender temporärer Leistungseinbruchs beendet ist. Das bedeutet, der über den String erhaltene und vermittels des Stromflusses entlang der zweiten Richtung angezeigte Impuls, in den zweiten Zustand zu wechseln, muss nicht die einzige Möglichkeit sein, um in den zweiten Zustand zu wechseln. Vielmehr kann auch eine dezentrale Entscheidung getroffen werden, zumindest temporär in diesen Zustand zu wechseln oder zurückzukehren, was auch bei kürzeren Verschattungen Vorteile bietet.

Gemäß einem Ausführungsbeispiel ist die elektronische Schaltung ohne eine Kommunikationsschnittstelle ausgebildet, das bedeutet, der Wechsel zwischen den Betriebszuständen kann im weiteren Sinne kommunikationslos oder ohne explizite Kommunikation erfolgen, indem beispielsweise der Stromfluss entlang der zweiten Stromflussrichtung interpretiert wird, ohne dass hierzu Nachrichten eines Kommunikationsprotokolls übertragen werden müssten, was eine einfache Steuerung der PV-Anlage ermöglicht.

Gemäß einem Ausführungsbeispiel ist die elektronische Schaltung ausgebildet, um in dem zweiten Zustand der Trennungseinrichtung zumindest eines aus
a) einem Maximum Power Point Tracking (MPPT) für das PV-Modul,
b) einem Trennen des PV-Moduls von dem String bei erkanntem Kurzschluss,
c) einem Trennen des PV-Moduls von dem String bei erkanntem Leerlauf des PV-Moduls und
d) einem Trennen des PV-Moduls von dem String bei erkannter Verschattung des PV-Moduls und/oder ein Wiederverbinden des PV-Moduls bei erkanntem Ende der Verschattung
auszuführen, d. h., eine oder mehrere dieser Funktionen auszuführen. Dies ermöglicht die Implementierung zusätzlicher Funktionen in der elektronischen Schaltung, was den Verzicht zusätzlicher Komponenten ermöglicht und hierdurch einen Vorteil verschafft.

Gemäß einem Ausführungsbeispiel umfasst eine Photovoltaik-Baugruppe ein PV-Modul und eine hierin beschriebene elektronische Schaltung, die mit dem PV-Modul gekoppelt ist.

Gemäß einem Ausführungsbeispiel umfasst ein PV-System eine Mehrzahl von seriell in einen String verschalteten PV-Baugruppen gemäß hierin beschriebener Ausführungsbeispiele. In derartigen PV-Systemen wird es ermöglicht, hohe PV-Spannungen zu nutzen und diese gleichzeitig zu vermeiden, wenn ein sicherer Zustand der PV-Anlage beziehungsweise des PV-Systems benötigt wird, indem das jeweilige PV-Modul vom String getrennt wird.

Gemäß einem Ausführungsbeispiel ist hierzu ein mit dem String gekoppelter elektrischer Spannungswandler vorgesehen, der ausgebildet ist, um eine auf dem Stromfluss in der ersten Stromflussrichtung basierende elektrische Schaltung zu erhalten und zu wandeln. Ferner ist in dem PV-System eine Quelle zum Anlagen des Stromflusses in die zweite Stromflussrichtung vorgesehen. Der Spannungswandler ist ausgebildet, um die Quelle zu steuern, um zumindest eine PV-Baugruppe in dem String zuzuschalten. Das bedeutet, ausgehend von der Steuerung der Quelle durch den Spannungswandler kann die PV-Baugruppe dazu gebracht werden, dass die darin angeordnete elektronische Schaltung das PV-Modul wieder an den String koppelt.

Gemäß einem Ausführungsbeispiel umfasst der Spannungswandler die Quelle oder stellt eine Funktion der Quelle bereit. Dies kann beispielsweise durch eine Variation der eingangsseitigen Spannung am Spannungswandler erfolgen, die zu einer Umkehrung der Stromflussrichtung in dem String zumindest kurzzeitig führt, um so den Stromfluss entlang der zweiten Stromflussrichtung bereitzustellen. Diese Funktion kann mit einfachen Mitteln implementiert werden und dennoch eine zuverlässige Steuerung des PV-Systems ermöglichen.

Gemäß einem Ausführungsbeispiel ist die Quelle ausgebildet, um den Strom entlang der zweiten Stromflussrichtung als Gleichstrom bereitzustellen. Vorteilhaft daran ist, dass auf eine komplexe Modulation und/oder Erzeugung oder Wandlung einer Wechselspannung oder eines Wechselstroms verzichtet werden kann.

Gemäß einem Ausführungsbeispiel weist die Quelle eine Strombegrenzung auf und/oder ist ausgebildet, um einen Konstantstrom bereitzustellen. Vorteilhaft daran ist, dass die Quelle die Stringverschaltung im PV-System bzw. die aktuell nötige Spannung nicht kennen muss, da sich diese durch den Konstantstrom selbst einstellen kann.

Gemäß einem Ausführungsbeispiel umfasst ein Fahrzeug ein hierin beschriebenes PV-System. Ein derartiges Fahrzeug kann beispielsweise ein PKW oder ein beliebiges anderes Fahrzeug sein, ist aber bevorzugt ein Lastkraftwagen, LKW, der eine große Fläche für PV-Module bereitstellen kann.

Gemäß einem Ausführungsbeispiel umfasst ein Verfahren zum Zuschalten eines PV-Moduls in einem PV-String ein Beaufschlagen einer elektronischen Schaltung mit einem zur ersten Stromrichtung entgegengesetzt gerichteten Steuerungsstrom. Die elektronische Schaltung ist zwischen das PV-Modul und den PV-String gekoppelt und liegt in einem ersten Betriebszustand vor, in welchem eine Trennungseinrichtung einen über das PV-Modul verlaufenden Strompfad auftrennt, und in welchem ein in einer ersten Stromrichtung gelieferter Strom des PV-Moduls an den String verhindert wird. Das Verfahren umfasst ferner ein auf dem Steuerstrom basierendes Steuern der Trennungseinrichtung in einen zweiten Zustand, in welchem der Stromfluss entlang der ersten Stromrichtung ermöglicht ist, um den Strompfad zu schließen.

Bevorzugte Ausführungsformen der vorliegenden Erfindung werden nachfolgend Bezug nehmend auf die beiliegenden Zeichnungen erläutert. Dabei zeigen:
- Fig. 1: ein schematisches Blockschaltbild einer elektronischen Schaltung gemäß einem Ausführungsbeispiel;
- Fig. 2: ein schematisches Blockschaltbild einer PV-Baugruppe gemäß einem Ausführungsbeispiel;
- Fig. 3: ein schematisches Blockschaltbild eines PV-Systems gemäß einem Ausführungsbeispiel;
- Fig. 4: eine U-I-Kennlinie eines PV-Moduls beim Zuschalten gemäß einem Ausführungsbeispiel;
- Fig. 5: eine U-I-Kennlinie eines PV-Moduls gemäß Ausführungsbeispielen während eines MPP-Trackings;
- Fig. 6: eine U-I-Kennlinie zum Erläutern eines Ausschaltens durch Kurzschluss und Leerlauf gemäß einem Ausführungsbeispiel;
- Fig. 7: eine beispielhafte tabellarische Darstellung unterschiedlicher Zustände einer elektronischen Schaltung gemäß einem Ausführungsbeispiel;
- Fig. 8: eine schematische Seitenschnittdarstellung eines Fahrzeugs gemäß einem Ausführungsbeispiel; und
- Fig. 9: ein schematisches Flussdiagramm eines Verfahrens gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

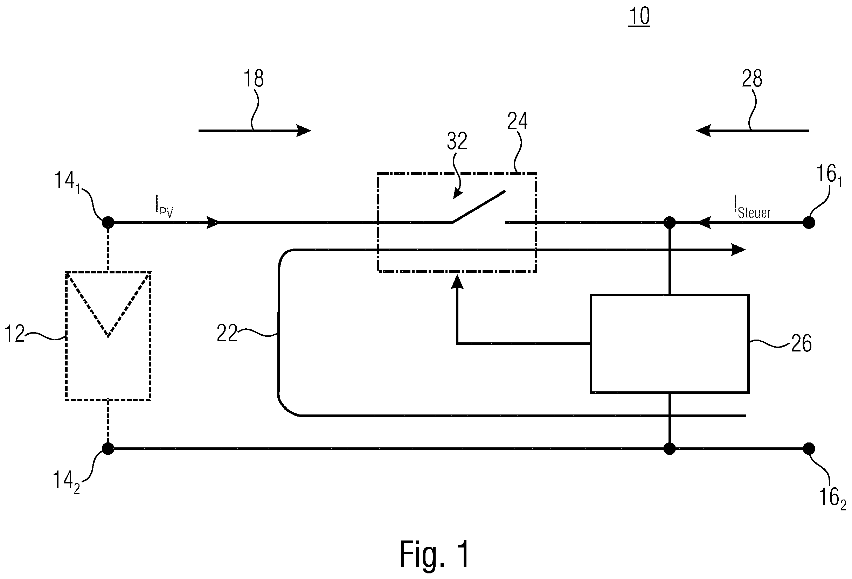

Fig. 1 zeigt ein schematisches Blockschaltbild einer elektronischen Schaltung 10 gemäß einem Ausführungsbeispiel. Die elektronische Schaltung ist bevorzugt für ein Photovoltaik (PV)-Modul 12 ausgelegt, welches möglicherweise, aber nicht notwendigerweise, Teil der elektronischen Schaltung 10 ist.

Die elektronische Schaltung 10 umfasst PV-Anschlüsse 14₁ und 14₂, die zur Kopplung mit dem PV-Modul 12 eingerichtet sind, wobei eine Anzahl der PV-Anschlüsse 14₁ und 14₂ an die Ausgestaltung des PV-Moduls 12 angepasst sein kann und eine Anzahl von zumindest 1, zumindest 2, zumindest 3, zumindest 4 oder mehr Anschlüssen umfassen kann. Die Spannung U_{PV_in} liegt bevorzugt im Rahmen der Schutzkleinspannung und beträgt bspw. höchstens von oder weniger als 48 Volt oder höchstens oder weniger als 60 Volt, so dass auch ein oder mehrere PV-Module 12 miteinander gekoppelt werden können.

Die elektronische Schaltung 10 umfasst ferner String-Anschlüsse 16₁ und 16₂ in einer Anzahl von bevorzugt zumindest 2, die eingerichtet sind, um in Kombination mit einem oder mehreren elektronischen Schaltungen beziehungsweise PV-Baugruppen in einem PV-String verschaltet zu werden. Beispielsweise kann eine Serienschaltung mehrerer PV-Baugruppen in dem PV-String vorgesehen sein.

Ein Strom I_{PV}, welcher durch das PV-Modul 12 geliefert wird, kann entlang einer ersten Stromflussrichtung durch einen Strompfad 22 entlang der ersten Stromflussrichtung 18 geleitet werden. Die erste Stromflussrichtung 18 kann sich dabei aus der Bauart des PV-Moduls 12 zumindest teilweise ergeben, etwa im Hinblick auf einen Pluspol und/oder einen Minuspol sowie eine Polung des PV-Moduls 12 gegenüber der Schaltung. In dem Strompfad 22, das heißt, zwischen zumindest einem der PV-Anschlüsse 14₁, 14₂ und zumindest einem der String-Anschlüsse 16₁, 16₂ ist eine Trennungseinrichtung 24 angeordnet, die ausgebildet ist, um den Strompfad 22 in einem ersten Zustand entlang der ersten Stromflussrichtung 18 zu unterbrechen, und um den Strompfad in einem zweiten Zustand entlang der ersten Stromflussrichtung 18 zu schließen. Die Trennungseinrichtung kann beispielsweise zumindest einen Schalter, eine Schalteranordnung und/oder gegebenenfalls zusätzliche Elemente aufweisen. Besonders bevorzugt sind Halbleiterschalter mit Body-Dioden, welche eine Stromleitfähigkeit entgegengesetzt zur ersten Stromflussrichtung 18 ermöglichen.

Die Trennungseinrichtung kann, wie dargestellt, im Plus-Pfad angeordnet sein oder zumindest teilweise im Minus-Pfad. Die Steuerung (26) kann alternativ zur gezeigten Anordnung auch zumindest teilweise auf der PV-Modul-Seite angeordnet sein, um die dort erzeugte elektrische Leistung als Energieversorgung zu nutzen.

Die elektronische Schaltung 10 umfasst eine Steuerungseinrichtung 26, die ausgebildet ist, um eine Stromflussinformation über einen Stromfluss bzw. eine Stromflussrichtung in zumindest einem Teilabschnitt des Strompfades 22 entlang einer zur ersten Stromflussrichtung 18 entgegengesetzten zweiten Stromflussrichtung 28 zu erhalten. Basierend auf der Stromflussinformation, das heißt, dass ein Strom I_{Steuer} entlang der zweiten Stromflussrichtung 28 durch zumindest den Teilabschnitt des Strompfades 22 fließt, ist die Steuerungseinrichtung 26 ausgebildet, um die Trennungseinrichtung 24 von dem ersten Zustand in den zweiten Zustand zu steuern, das bedeutet, das PV-Modul 12 in den String zuzuschalten, beispielsweise, indem ein Schalter 32 der Trennungsanordnung 24 in einen leitenden Zustand gesteuert wird. Die erste Stromflussrichtung 18 kann somit vom PV-Modul hin zum String gerichtet sein, während die zweite Stromflussrichtung vom String hin zum PV-Modul und beispielsweise über die Body-Dioden verlaufen kann. Der Schalter 32 kann bspw. als Halbleiterschalter hiervon verschieden gebildet werden, etwa als mechanischer Schalter oder dergleichen. Ein Hableiterschalter kann bspw. als MOSFET oder als IGBT gebildet werden.

Der Strom I_{Steuer} kann beispielsweise über die Steuerungseinrichtung 26 fließen und/oder über entsprechend eingerichtete Elemente der Trennungseinrichtung 24. Auch ein über die Trennungseinrichtung 24 fließender Strom entlang der zweiten Stromflussrichtung 28 kann von der Steuerungseinrichtung 26 festgestellt werden, ohne dass hierfür die Steuerungseinrichtung 26 Teil des Strompfades 22 sein muss.

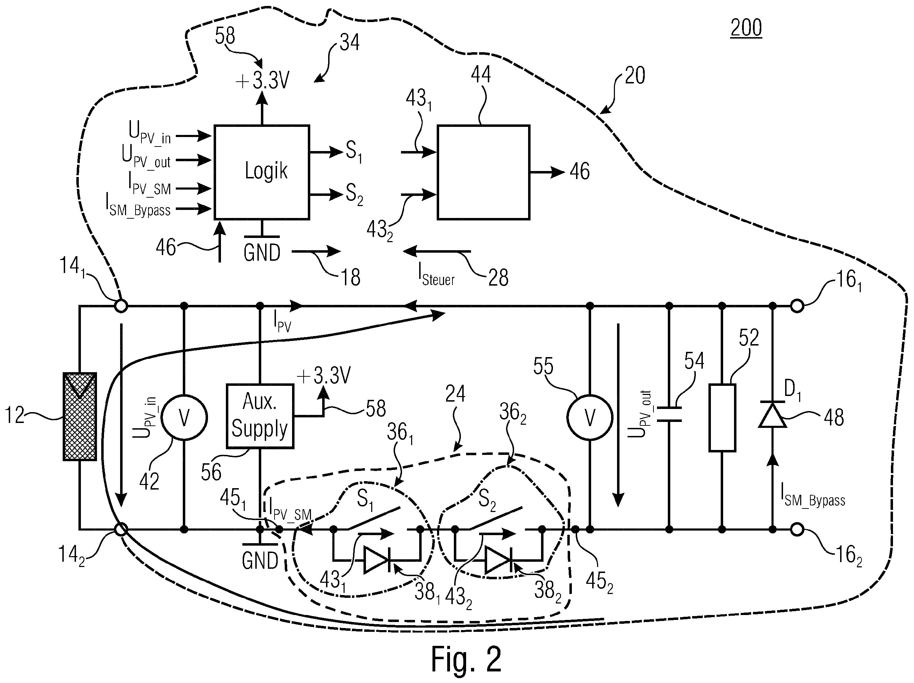

Fig. 2 zeigt ein schematisches Blockschaltbild einer PV-Baugruppe 200 gemäß einem Ausführungsbeispiel. Die PV-Baugruppe umfasst das PV-Modul 12 und eine mit dem PV-Modul 12 gekoppelte elektronische Schaltung 20, wobei problemlos auch die elektronische Schaltung 10 alternativ oder zusätzlich zu der elektronischen Schaltung 20 vorgesehen sein kann.

Die elektronische Schaltung 20 umfasst dabei eine Steuerungseinrichtung 34, die die Funktionen der Steuerungseinrichtung 26 aufweisen kann. Die Steuerungseinrichtung 34 kann Informationen über eine Reihe von Spannungen und/oder Strömen in der elektronischen Schaltung 20 aufweisen und basierend hierauf die Trennungseinrichtung 24 steuern. Die Trennungseinrichtung 24 umfasst in der dargestellten Ausführungsform beispielhaft zwei in Serie zueinander verschaltete Halbleiterschalter 36₁ und 36₂, die mit S₁ und S₂ bezeichnet sind und deren Body-Dioden 38₁ und 38₂ gleichgerichtet sind, das bedeutet, sie wirken entlang der zweiten Stromflussrichtung 28 elektrisch leitend. Es sei aber darauf hingewiesen, dass auch eine andere beliebige Anzahl von Schaltern, das heißt, zumindest einer, zumindest zwei, zumindest drei oder mehr Schalter seriell und/oder parallel in der Trennungseinrichtung 24 verschaltet werden können.

Alternativ oder zusätzlich ist die Verwendung von Halbleiterschaltern zwar eine mögliche Ausgestaltung, es können jedoch auch andere Arten von schaltenden Elementen als Schalter 32 der Trennungseinrichtung 24, etwa mechanische Schalter oder Relais, verwendet werden, um den Strompfad 22 in dem ersten Zustand zu unterbrechen. Die Anordnung mehrerer seriell und/oder parallel zueinander verschalteter Elemente ermöglicht eine hohe Ausfallsicherheit und/oder einer hohen Flexibilität bei der Bauteilauswahl. So kann beispielsweise ein in einem Fehlerzustand dauerhaft leitender erster Schalter mit einem seriell hierzu verschalteten zweiten Schalter kompensiert werden, der noch in einen geöffneten Zustand gebracht werden kann.

Der Steuerstrom I_{Steuer} kann entlang der Stromflussrichtung 28 auch bei geöffneten oder nicht-leitenden Schaltern 36₁ und 36₂ über die Body-Dioden 38₁ und 38₂ fließen. Über diese Body-Dioden 38₁ und 38₂ ergibt sich ein verglichen mit den Schaltern unterschiedlicher Strompfad, wenn dieser mit dem Strompfad 22 verglichen wird und beispielsweise ein mechanischer Schalter in Zusammenwirkung mit einer separat hierzu verschalteten Diode betrachtet wird. Für den Fall der Verwendung eines Halbleiter-Schalters als Schalter 36₁ und/oder 36₂ kann der Strompfad 22 dabei auch vollständig von dem Steuerstrom I_{Steuer} genutzt werden. Eine Implementierung des Schalters 32 als zumindest ein MOSFET-Halbleiterschalter bzw. die Verwendung mehrerer Schalter von denen zumindest einer als MOSFET gebildet ist, kann eine synergetische Nutzung einer intrinsischen Body-Diode 38₁ und/oder 38₂ ermöglichen, was die Verschaltung zusätzlicher Dioden aber nicht ausschließt. Umfasst die Trennungseinrichtung 24 bspw. eine andere Art von Halbleiterschalter, etwa einen IGBT, kann eine zur Body-Diode 38₁ und/oder 38₂ vergleichbare Wirkung durch Verschalten einer zusätzlichen Diode erhalten werden, indem diese parallel bzw. antiparallel verschaltet wird. Eine derartige Verschaltung einer Diode kann auch bei Verwendung eines mechanischen Schalters oder Relais umgesetzt werden. Es sei angemerkt, dass die Trennungseinrichtung 24 ein oder mehrere schaltende Elemente gleicher oder unterschiedlicher Arten aufweisen kann.

Optional kann eine oder mehrere der nachfolgenden Informationsquellen in der elektronischen Schaltung 20 angeordnet sein, um die Steuerungseinrichtung 34 mit zusätzlicher Informationen zu versorgen. So kann beispielsweise eine Sensoreinrichtung 42 vorgesehen sein, die eine von dem PV-Modul 12 bereitgestellte elektrische Spannung U_{PV_in} erfasst und ein entsprechendes Signal an die Steuerungseinrichtung 34 liefert. Alternativ kann die entsprechende Spannung auch direkt in der Steuerungseinrichtung 34 gemessen werden.

Alternativ oder zusätzlich kann die elektronische Schaltung 20 eine Sensoreinrichtung 44 aufweisen, die ausgebildet ist, um eine Richtung des Stromflusses zu erkennen. Hierzu kann die Sensoreinrichtung 44 einen Spannungsabfall 43₁ und/oder 43₂ über zumindest eine der Body-Dioden 38₁ bzw. 38₂ detektieren, messen oder erfassen. Dabei kann die Information durch eine Messung lediglich eines der beiden Spannungsabfälle 43₁ oder 43₂ bzw. einer Teilmenge der zumindest zwei Spannungsabfälle der zumindest zwei Halbleiterschalter ausreichend sein. Es sei angemerkt, dass im Falle der Verwendung lediglich eines Schalters ein Spannungsabfall messbar ist und im Falle einer Anzahl von mehr als zwei Schaltern auch eine entsprechend höhere Zahl von Abfällen oder Komponenten zum Gesamtspannungsabfall. Alternativ kann der Spannungsabfall 43₁ und 43₂ über jeden der zumindest zwei seriell verschalteten Schalter einzeln gemessen werden oder es kann ein gesamter Spannungsabfall zwischen Punkten 45₁ und 45₂ gemessen werden.

Der Spannungsabfall 43₁ über der Body-Diode 38₁ und/oder der Spannungsabfall 43₂ über der Body-Diode 38₂ kann mit dem Stromfluss I_{Steuer} entlang der zweiten Stromflussrichtung 28 kausal zusammenhängen. Überschreitet bspw. der Spannungsabfall 43₁ oder 43₂ bspw. einen von einer jeweiligen Schleusenspannung der jeweiligen Body-Diode 38₁ bzw. 38₂ beeinflussten vordefinierten Schwellwert, so deutet dies auf einen Stromfluss entlang der zweiten Stromflussrichtung hin. Analog ist ein kombinatorischer Schwellwert von der Kombination an Schleusenspannungen der in Serie geschalteten Body-Dioden 38₁ und 38₂ beeinflusst, wenn die Messung über die Punkte 45₁ und 45₂ erfolgt. Auch wenn eine detaillierte Auswertung hinsichtlich Stromstärke oder dergleichen nicht ausgeschlossen ist, so kann für die Beurteilung des Vorliegens des Steuerstroms I_{Steuer} bereits eine binäre Entscheidung im Sinne von Ja/Nein ausreichend sein.

Die Sensoreinrichtung 44 kann ein Signal 46 bereitstellen, welches eine Information über das Vorliegen des Stromflusses I_{Steuer} anzeigt. Die Information kann vorliegen, wenn das Signal 46 bereitgestellt wird oder bspw., wenn das Signal 46 nicht oder in einer veränderten Eigenschaft wie Amplitude oder Frequenz bereitgestellt wird. So kann bspw. ein Abschalten des Signals 46 ebenso eine Information darüber aufweisen, ob der Strom I_{Steuer} eingesetzt hat, wie eine Zuschaltung des Signals 46. Die Stromflussinformation der Steuerungseinrichtung 34 kann auf dem erkannten Stromfluss basieren. Das Signal 46 kann beispielsweise die erfasste Spannung 43₁ und/oder 43₂ selbst sein oder ein hieraus abgeleitetes Signal.

Obwohl die Sensoreinrichtung 44 als von der Steuerungseinrichtung separates Element dargestellt ist, welches zumindest zur Übertragung des von der Sensoreinrichtung 44 bereitgestellten Signals 46 mit der Steuerungseinrichtung 34 gekoppelt ist, kann die Sensoreinrichtung 44 auch einen Teil der Steuerungseinrichtung 34 bilden und bspw. in diese integriert sein. Dadurch kann bspw. das Signal 46 intern erzeugt werden oder ganz entfallen und/oder die Steuerungseinrichtung 34 die Spannungsabfälle 43₁ und/oder 43₂ direkt erfassen.

Die elektronische Schaltung 20 kann optional weitere Elemente aufweisen. Beispielsweise kann eine mit D₁ bezeichnete Bypass-Diode zwischen die String-Anschlüsse 16₁ und 16₂ gekoppelt sein, die ausgebildet ist, um in dem ersten Zustand, in welchem die Trennungseinrichtung 24 den Strompfad 22 trennt, einen elektrischen Stromfluss in dem String zu ermöglichen, beispielsweise, um einen Strom anderer in Serie verschalteter PV-Module zu ermöglichen.

Dies schließt eine optionale Anordnung zumindest eines Widerstandselements 52 und/oder Kondensatorelements 54 nicht aus. Alternativ oder zusätzlich kann auch eine Sensoreinrichtung 55 zum Messen einer Spannung U_{PV_out} vorgesehen sein.

Optional kann ebenfalls eine Spannungsquelle 56, bezeichnet mit Auxiliary/AUX Supply 56 vorgesehen sein, die ausgebildet ist, um aus der von dem PV-Modul 12 erzeugten Spannung U_{PV_in} , beispielhaft 3,3 Volt, oder einen beliebigen anderen an die Steuerungseinrichtung 34 angepassten Wert einer Versorgungsspannung 58 bereitzustellen, um die Steuerungseinrichtung 34 zu betreiben. Die elektronische Schaltung kann einen Puffer oder Energiespeicher aufweisen, der eine Energiereserve für die Versorgung der elektronischen Schaltung bereitstellen kann falls das PV-Modul unzureichende Energiemengen bereitstellt.

Die elektronische Schaltung 20 und/oder die Steuerungseinrichtung 34 kann gegenüber einem Bezugspotenzial GND betrieben werden, welches ein lokales Bezugspotenzial sein kann oder auch eine elektrische Masse, insbesondere beim stationären Betrieb. Bei einem Betrieb der elektronischen Schaltung 20 beispielsweise in einem Fahrzeug kann das lokale Bezugspotenzial GND beispielsweise mit der Karosserie und/oder einem Potenzial einer Fahrzeugbatterie verschaltet sein. Unterschiedliche elektronische Schaltungen eines Strings können aber auch von einander verschiedene Bezugspotentiale aufweisen.

Die Steuerungseinrichtung 34 kann Informationen darüber erhalten, ob und/oder in welcher Höhe ein Strom U_{PV_SM} von dem PV-Modul 12 bereitgestellt wird beziehungsweise an den String geleitet wird. Alternativ oder zusätzlich kann die Steuerungseinrichtung 34 Informationen über eine Höhe des über die Bypass-Diode 48 fließenden Stroms I_{SM_Bypass} erlangen. Alternativ oder zusätzlich kann auch die über dem PV-Modul anliegende Spannung U_{PV_in} der Steuerungseinrichtung 34 bekannt sein und/oder die Stromflussrichtung über die Sensoreinrichtung 44 bestimmt werden.

Dieser Umfang an Informationen ermöglicht eine vielfältige Steuerung der elektronischen Schaltung 20 in einem PV-System.

In anderen Worten umfasst eine mögliche in Ausführungsbeispielen beschriebene entwickelte Lösung eine elektronische Schaltung, welche als zentrales Element einen Schalter, die Trennungseinrichtung 24, zur Auftrennung des PV-Modulstrangs aufweist. Dieser Schalter beziehungsweise diese Schalter können aufgrund verschiedener messbarer Parameter zugeschaltet bzw. verbunden oder leitend geschaltet oder abgeschaltet bzw. getrennt geschaltet werden, so dass sichergestellt werden kann, dass im Falle eines Unfalls oder bei intaktem HV-Kreis die Serienschaltung der PV-Module aufgetrennt wird und die Spannung im PV-Kreis unter der Schutzkleinspannung liegt.

Die Schaltung umfasst einen Eingang, an welchem ein PV-Modul 12 angeschlossen werden kann. Eine Spannungsversorgung, welche aus der PV-Modulspannung gespeist wird, kann vorgesehen sein und ferner kann ein, zwei oder mehr in Serie verbundene Schalter mit Trennfunktion und einer Bypass-Diode zwischen Eingang und Ausgang angeordnet werden. Es können optional eines oder mehrere der folgenden Größen gemessen werden: Eingangsspannung, Ausgangsspannung sowie PV-Strom und Bypass-Strom. Aus den gemessenen Werten können mittels einer Logik in der Steuerungseinrichtung die Schalterzustände festgelegt werden.

In anderen Worten zeigt Fig. 2 ein schematisches Blockschaltbild eines Smart-PV-Moduls als Schaltung zur kommunikationslosen, d. h., keinen Kommunikationsbus oder dergleichen erfordernden, Zu- und Abschaltung. Dies verhindert nicht die Übertragung von Information im weiteren Sinn, etwa einen Stimulus zum Zuschalten vermittels des Stroms I_{Steuer}. Alternativ oder zusätzlich können auch andere Zustände oder Befehle an das PV-Modul übermittelt werden. Um bspw. ein Trennen auf Seiten des PV-Moduls auszulösen, kann das PV-System z. B. einen Kurzschluss oder Leerlauf im String erzeugen, um das gewünschte Verhalten, das Trennen auszulösen.

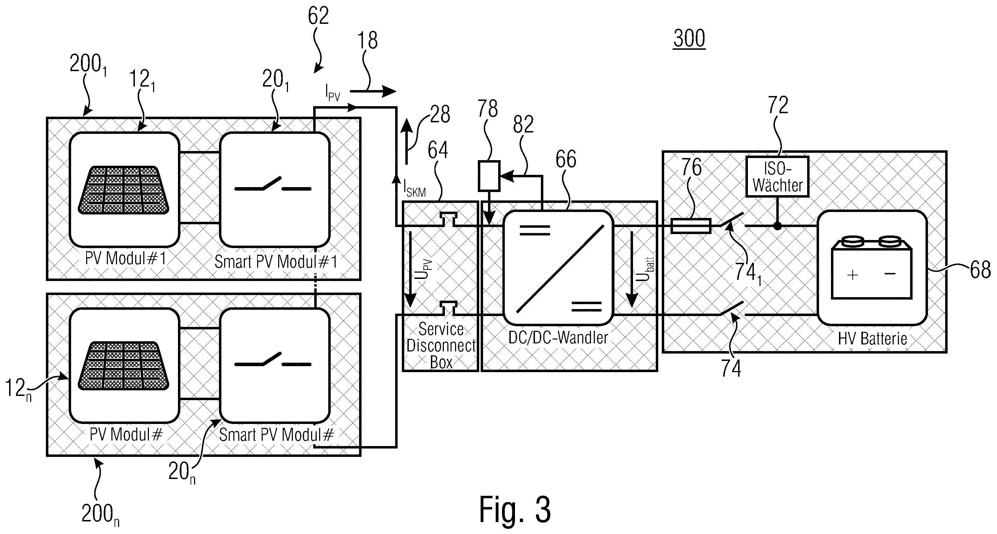

Fig. 3 zeigt ein schematisches Blockschaltbild eines PV-Systems 300 gemäß einem Ausführungsbeispiel. In dem PV-System 300 können eine Mehrzahl von zumindest 2, zumindest 3, zumindest 5, zumindest 10 oder mehr PV-Baugruppen zu einem String 62 seriell verschaltet sein. Die PV-Baugruppen können dabei beispielsweise in Übereinstimmung mit der Fig. 2 gebildet sein, wobei ohne Weiteres eine höhere Anzahl von PV-Modulen mit einer elektronischen Schaltung gekoppelt sein kann und/oder die elektronische Schaltung 10 mit einem oder mehrerer der PV-Module gekoppelt sein kann. Die elektronische Schaltung 20 einer jeweiligen PV-Baugruppe 200₁ bis 200ₙ mit n > 1 kann dabei das jeweilige PV-Modul 12₁ bis 12ₙ vom String 62 trennen. Optional kann das PV-System 300 eine sogenannte Service Disconnect Box 64 aufweisen, das bedeutet, eine Einrichtung zum Trennen der PV-Komponenten beziehungsweise PV-Baugruppen 200 von weiteren Komponenten, etwa einem Spannungswandler 66, der beispielhaft als DC/DC-Wandler ausgeführt sein kann, um eine Hochvolt (HV)-Batterie 68 zu betreiben, beispielsweise im Falle eines Netzanschlusses, aber auch als DC/AC-Wandler oder galvanisch trennender Wandler betrieben werden kann. Alternativ oder zusätzlich kann ein Isolations-Wächter 72 mit der Batterie 68 verbunden sein. Dies schließt zusätzliche Elemente, etwa Schalter 74₁ und/oder 74₂ oder Widerstände/Induktivitäten 76 nicht aus.

In dem PV-System 300 kann der elektrische Spannungswandler 66 ausgebildet sein, um eine auf dem Stromfluss in der ersten Stromflussrichtung 18 basierende elektrische Spannung zu erhalten und zu wandeln, die beispielsweise als U_{PV} bezeichnet ist. Das PV-System 300 umfasst eine Quelle 78 zum Anlegen des Stromflusses in die zweite Stromflussrichtung 28, beispielsweise dem Strom I_{Steuer} aus Fig. 2. Der Spannungswandler 66 kann ausgebildet sein, um die Quelle 78 zu steuern, beispielsweise durch ein Steuersignal 82, um zumindest eine der PV-Baugruppen 200₁ bis 200ₙ in dem String 62 zuzuschalten. Dabei kann der Strom I_{Steuer} beispielsweise für sämtliche PV-Baugruppen 200₁ bis 200ₙ wirksam sein, was aber beispielsweise lediglich in PV-Baugruppen 200, welche sich im getrennten, ersten Zustand befinden, zu einem Wechsel des Vorzeichens der Spannung 43₁, oder 43₂ oder der Spannung zwischen 45₁ und 45₂ führt. Bei aktiven und zugeschalteten PV-Baugruppen, welche sich im zweiten Zustand befinden, wird dahingegen kein Zustandswechsel bewirkt.

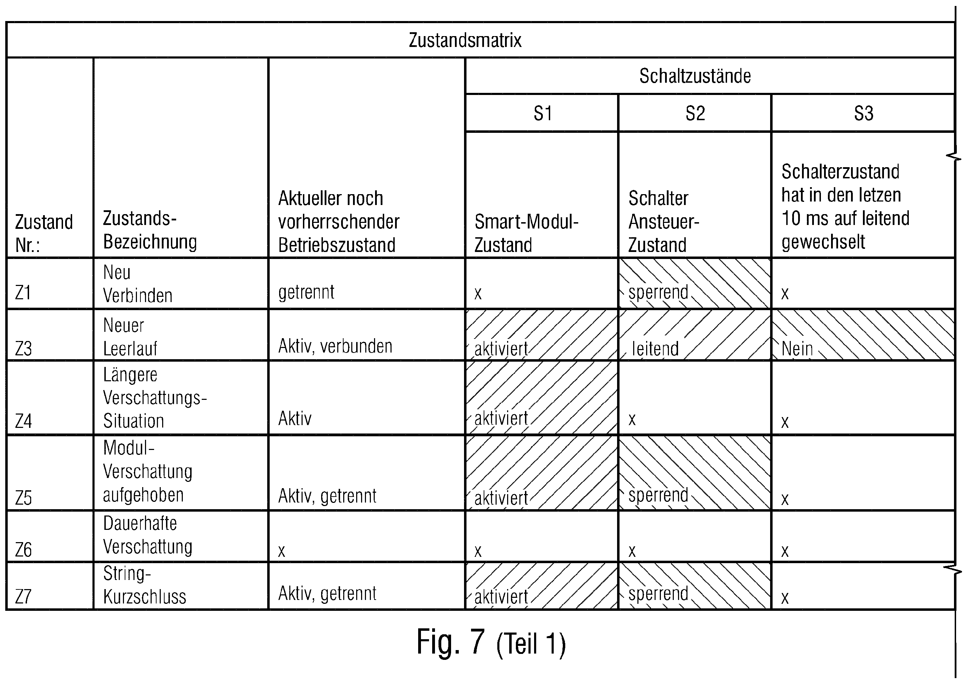

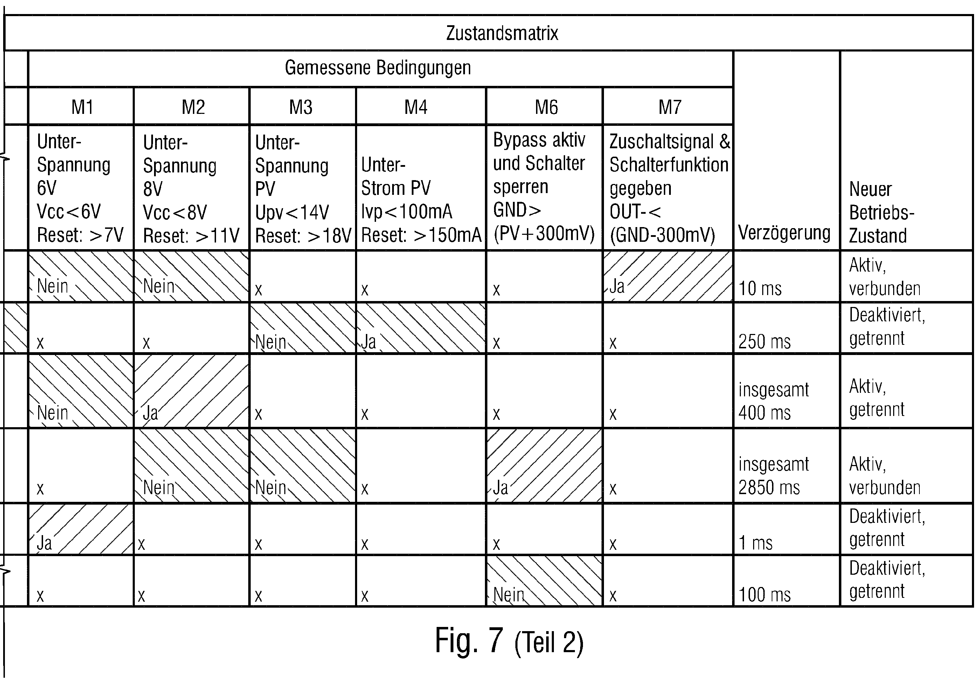

Eine zeitliche Dauer des Stroms I_{Steuer} entlang der zweiten Stromflussrichtung 28 kann dabei gering sein und beispielsweise für einen Zeitraum von zumindest 20 Millisekunden und höchstens 80 Millisekunden, zumindest 10 Millisekunden und höchstens 500 Millisekunden oder zumindest 100 Millisekunden und höchstens 200 Millisekunden anliegen, wobei eine Verkürzung der Zeitdauer mit einer geringeren Beanspruchung von Komponenten und Leistungseinbußen einhergehen kann und eine vergleichsweise längere Zeitdauer die Güte des damit übermittelten Ereignissen erhöhen kann. Gemäß Ausführungsbeispielen hängt die Dauer von der Ausgestaltung der Logik ab und ist beispielsweise unter Verweis auf Fig. 7 so gewählt, dass sie größer ist als die im Zustand Z1 eingestellte Verzögerung und/oder kleiner als die im Zustand Z7 eingestellte Verzögerung ist.

Gemäß einem Ausführungsbeispiel ist die Quelle 78 ein Teil des Spannungswandlers 66 und/oder der Spannungswandler 66 stellt eine Funktion der Quelle bereit, das heißt, er kann ausgebildet sein, um eine Modulation der Spannung U_{PV} bzw. des Stromes Ipv bzw. I_{Steuer} auszuführen.

Der Strom I_{Steuer} kann beispielsweise als Gleichstrom bereitgestellt werden, beispielsweise dergestalt, um in Kenntnis des Spannungsabfalls an den Body-Dioden 38₁ und/oder 38₂ dennoch einen Stromfluss zu ermöglichen. Beispielsweise kann die Quelle 78 eine Strombegrenzung aufweisen und/oder ausgebildet sein, um einen Konstantstrom bereitzustellen, was es ermöglicht, dass die Quelle 78 einen konstanten Strom einregelt.

Beispielsweise kann eine Body-Diode einen Spannungsabfall von in etwa 0,5 Volt bewirken, was entsprechend in den Auslegungen des Spannungswandlers 66 und/oder der Quelle 78 berücksichtigt werden kann.

In anderen Worten zeigt Fig. 3 eine Systemübersicht einer fahrzeugintegrierten Photovoltaik-Anlage mit PV-Modulen, Smart-PV-Modulen 20 gemäß Ausführungsbeispielen, einem DC/DC-Wandler und einer HV-Batterie. Als ein Smart PV-Modul kann ein mit einer intelligenten und hierin beschriebenen elektronischen Schaltung gekoppeltes PV-Modul verstanden werden.

In weiter anderen Worten kann eine elektronische Schaltung gemäß Ausführungsbeispiele, um die Nachteile im Stand der Technik zu vermeiden, sicherstellen, dass beispielsweise auch während des Trennens der Service Disconnect Box keine zu hohe Spannung im PV-Kreis anliegt. Hierin beschriebene elektronische Schaltungen ermöglichen es, einen sicheren Zustand der PV-Module und des PV-Kreises herzustellen, indem der PV-Kreis aufgetrennt wird. Diese Trennung geschieht nahe des PV-Moduls und optional kommunikationslos, das heißt, ein zusätzliches Signal zwischen DC/DC-Wandler und Smart-PV-Modul, das heißt, der elektronischen Schaltung 10 und/oder 20 in Form einer zu übertragenden Nachricht ist nicht notwendig. Vielmehr kann auf die Parameterspannung und Strom im PV-Modul, das heißt Eingang und Ausgang, geachtet werden und je nach Zustand das PV-Modul zugeschaltet oder abgeschaltet werden.

Optional kann zusätzlich zur erfindungsgemäßen Zuschaltung der PV-Module durch die elektronische Schaltung auch weitere Funktionalität in der Steuerungseinrichtung beziehungsweise der elektronischen Schaltung vorgesehen sein. Im Weiteren werden zum Verständnis fünf verschiedene Zustände detailliert beschrieben:
1. Zuschalten
2. Maximum Power Point Tracking (MPPT)
3. Abschaltung durch Kurzschluss
4. Abschaltung durch Leerlauf, etwa bei Auftrennen bzw. Unterbrechen des Stringstromkreises und/oder fehlendem Stromfluss
5. Zuschaltung nach Verschattung

### 1. Zuschalten

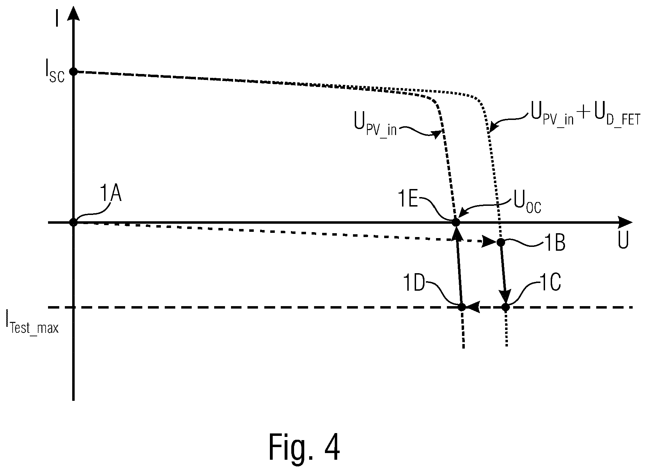

Das Zuschalten des Smart-PV-Moduls kann durch eine Spannungsquelle, etwa die Quelle 78, zum Bereitstellen eines Testsignals oder durch den DC/DC-Wandler ausgelöst werden. Die Testsignalquelle kann eingeschaltet oder aktiviert werden und eine positive Spannung an den Ausgang des Smart-PV-Moduls anlegen, wobei hierzu auf Fig. 4 verwiesen wird. Ausgehend von in dem Punkt 1A dargestellten Zustand kann die Spannung, so lange erhöht werden, bis sie der Summe aus Leerlaufspannung des PV-Moduls U_{PV_in} in Fig. 2 und dem Spannungsabfall über den beispielsweise als MOSFETs gebildeten Schaltern 36₁ und 36₂, was mit dem Parameter U_{D_FET} bezeichnet ist, entspricht, um am Zustandspunkt 1B anzugelangen. Das bedeutet, der Strom kann sich umkehren, die Spannung im String und an den Ausgängen der Schaltung kann dagegen gleichbleiben, lediglich die Spannung über den sperrenden Schaltern kehrt sich um. Die Spannung des Testsignals wird weiter erhöht, bis sich ein Teststrom I_{Test_max} eingestellt hat, welcher über die Body-Dioden des/der Schalter (MOSFETs) und den PV-Generator fließt, was im Punkt 1C erreicht wird. Basierend hierauf kann die Steuerungseinrichtung beispielsweise die Trennungseinrichtung in den zweiten Zustand überführen und die Schalter S₁ und S₂ zuschalten, was zum Punkt 1D führen kann. Sind alle in Serie verschalteten Smart-PV-Module des Systems 300 zugeschaltet, wird die Testsignalquelle ausgeschaltet, Punkt 1E, und das PV-Modul geht in den Leerlauf.

In anderen Worten zeigt Fig. 4 eine U-I-Kennlinie des PV-Moduls beim Zuschalten.

### 2. Maximum Power Point Tracking (MPPT)

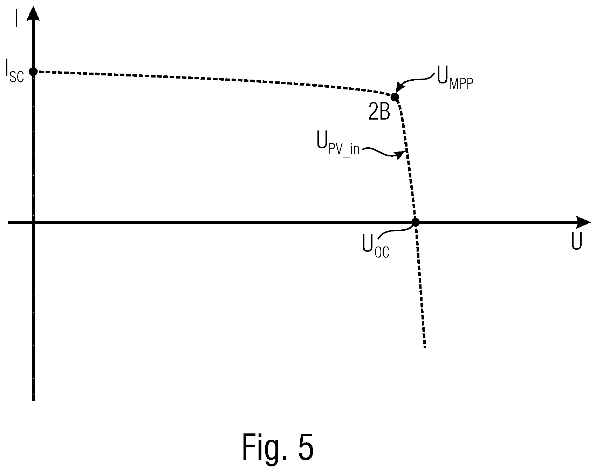

Anhand der Fig. 5 wird das MPPT erläutert. Sind einige oder alle Smart-PV-Module zugeschaltet, kann der DC/DC-Wandler aktiv werden und den gesamten PV-Generator im Arbeitspunkt seiner maximalen Leistung (MPP) betreiben, siehe Punkt 2B der Fig. 5. Dazu wird in der Regelung des DC/DC-Wandlers beziehungsweise des Spannungswandlers 66 ein Algorithmus eingesetzt, welcher durch Variation der Spannung oder des Stroms diesen Arbeitspunkt sucht. Damit das Smart-PV-Modul in diesem Zustand verbleibt, kann vorgesehen sein, eine ausreichende Eingangsspannung U_{PV_in} beizubehalten, siehe Fig. 2, sowie einen Grenzwert des PV-Stroms I_{PV_SM} nicht zu unterstreiten.

In anderen Worten zeigt Fig. 5 eine U-I-Kennlinie eines PV-Moduls gemäß Ausführungsbeispielen während eines MPP-Trackings.

### 3. Ausschalten/Kurzschluss (Short Circuit, SC)

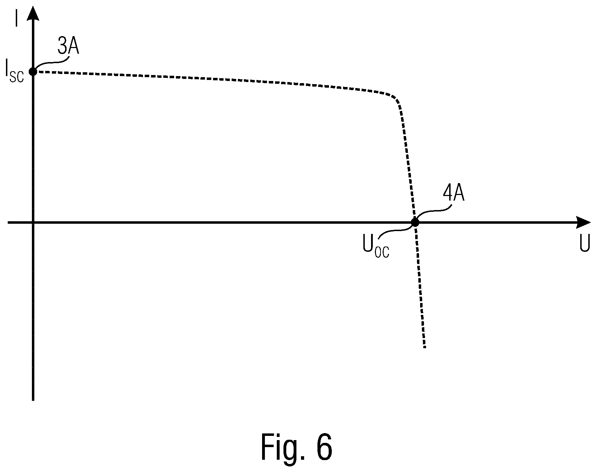

Wird der Ausgang des Smart-PV-Moduls kurzgeschlossen und sinkt die PV-Eingangsspannung für eine bestimmte Zeit, etwa zumindest 200 Millisekunden, zumindest 300 Millisekunden oder zumindest 400 Millisekunden, bspw. 400 ms unter die beispielhafte Schwelle N x U_{SM_Bypass} mit N als Anzahl der in Serie verschalteten Smart-PV-Module, wie es im Punkt 3A der Fig. 6 dargestellt ist, so kann die Steuerungseinrichtung ausgebildet sein, um die Trennungseinrichtung in den ersten Zustand zu überführen und beispielsweise die Schalter S₁ und/oder S₂ zu öffnen. U_{SM_Bypass} bezeichnet die Vorwärtsspannung der Bypass-Diode, welche zwischen bspw. 10 mV und 1 V liegen kann, je nachdem, ob sie aktiv (mit einem Schalter und einer Steuerung) oder passiv (z.B. Schottky-Diode) ausgeführt ist. Die Multiplikation ist für übereinstimmende Werte von U_{SM_Bypass} in den unterschiedlichen Modulen gültig.

### 4. Ausschalten/Leerlauf (Open Circuit, OC)

Wird der Spannungswandler inaktiv oder liegt ein Kabelbruch vor, kann das PV-Modul in den Leerlauf gehen, wie es beispielsweise in Punkt 4A der Fig. 6 dargestellt ist. Der PV-Modulstrom sinkt unter eine gewisse Schwelle. Liegt dieser Zustand für eine bestimmte Zeit vor, wenn beispielsweise der Modulstrom I_{PV_SM} ≤ 100 mA beträgt und dies für eine Zeitdauer von mehr als 200 Millisekunden, mehr als 300 Millisekunden oder mehr als 400 Millisekunden, bspw. ca. 250 Millisekunden der Fall ist, so können ebenfalls die Schalter S₁ und/oder S₂ getrennt werden.

Hierbei wird der Zustand eines fehlenden bzw. nicht ausreichenden Stroms betrachtet. Erkannt werden kann dabei eine Unterbrechung des Strings. Der DC/DC-Wandler kann ebenfalls die Trennung über den Leerlauf verursachen, indem er keinen Strom bezieht. In letzterem Fall würde der DC/DC Wandler-eine Leerlaufspannung an den String anlegen bzw. diese würde sich von alleine einstellen.

In anderen Worten zeigt Fig. 6 eine U-I-Kennlinie zum Erläutern eines Ausschaltens durch Kurzschluss und Leerlauf.

### 5. Zuschalten nach Verschattung

Tritt eine Verschattung in einem PV-Modul auf und hält diese so lange an, dass die Spannungsversorgung des Smart-PV-Moduls nicht mehr sichergestellt ist, insbesondere unter Verwendung der internen Spannungsquelle 56, so kann der Schalter S₁ und/oder S₂ in einen geöffneten Zustand geschalten werden, das bedeutet, die Trennungseinrichtung in den ersten Zustand gebracht werden. Nach vorgegebener Zeit schalten die Schalter S₁ und S₂ beziehungsweise werden in einen leitenden Zustand gebracht, sofern vorher ein Bypass-Strom geflossen ist und eine ausreichend hohe PV-Eingangsspannung vorlag, was es ermöglicht zu prüfen, ob ein Ende der der Verschattungssituation vorliegt. Sollte weiterhin eine Verschattung vorliegen, wird sich das Modul abermals durch Einbruch der Versorgungsspannung trennen. Liegt dagegen keine Verschattung mehr vor, verbleibt das Modul im verbunden Zustand. Es kann ausreichend sein, zu überprüfen, ob ein Bypass-Strom fließt, ohne zu messen, wie hoch dieser ist.

Fig. 7 zeigt eine beispielhafte tabellarische Darstellung unterschiedlicher Zustände, die von erfindungsgemäßen Steuerungseinrichtungen eingenommen werden können. Insbesondere wird hier auch dargestellt, dass ein Zustand, der in der Steuerungseinrichtung vorliegen kann, zweistufig sein kann und zwar in einer ersten Stufe "aktiv oder deaktiviert" und in einer zweiten Stufe "getrennt oder verbunden". Dabei bezeichnet die erste Stufe einen Grad der Autonomie des lokalen Moduls, der PV-Baugruppe. In einem aktiven Zustand derselben, wie es beispielsweise im Zustand Z3, Z4, Z5, Z6 oder Z7 zu Beginn der Fall ist, kann prinzipiell eine lokale Entscheidung vorgenommen werden, ob z.B. von einem getrennten

Zustand in einen verbundenen Zustand gewechselt wird, das bedeutet, die Trennungsvorrichtung in den zweiten Zustand wechselt. In einem inaktiven Zustand oder deaktivierten Zustand, wie er beispielsweise zu Beginn von Z1 vorliegen kann, kann die Logik der Steuerungseinrichtung so ausgelegt sein, dass der Stromfluss entlang der zweiten Stromflussrichtung 28 als Ereignis wahrzunehmen ist, um diese Aktion auszulösen. Eine Zuschaltung über den Zustand Z1 kann möglicherweise zu jedem Zeitpunkt erfolgen, unabhängig von einem zuvor deaktivierten Zustand oder aktivierten Zustand, wie es durch die Spalten S1, S2 und S3 der Tabelle erläutert ist.

In der Tabelle bezeichnet das Symbol "x" in einem Feld, dass der Zustand der Schalter oder die jeweilige Bedingung ohne weitere Relevanz sein kann. Die dargestellten Zeiten und/oder Spannungen sind dabei lediglich beispielhaft zu verstehen und schränken die vorliegenden Ausführungsbeispiele nicht ein. Vielmehr können basierend auf den verwendeten Komponenten auch andere Werte angewendet werden.

Wie es aus der Tabelle der Fig. 7 erkennbar ist, kann die Steuerungseinrichtung in Ausführungsbeispielen ausgebildet sein, um die Trennungseinrichtung 24 von dem zweiten Zustand basierend auf einem Abschaltereignis in den ersten Zustand zu steuern, das bedeutet beispielsweise, die Schalter zu öffnen. Unter Verweis auf die Tabelle der Fig. 7 können derartige Abschaltereignisse beispielsweise ein neuer Leerlauf, eine dauerhafte Verschattung oder ein String-Kurzschluss sein. Alternativ oder zusätzlich kann die Steuerungseinrichtung ausgebildet sein, um ein solches Abschaltereignis als ein in dem PV-Modul 12 oder dem String 62 oder der elektronischen Schaltung 10 oder 20 verursachtes Abschaltereignis zu erkennen, also ein Abschaltereignis, das ausgehend vom Spannungswandler 66 jenseits der Service Disconnect Box 64 eintritt.

Gemäß einem Ausführungsbeispiel kann die Steuerungseinrichtung ausgebildet sein, um nach dem erkannten Abschaltereignis die Trennungseinrichtung abhängig von dem über den String 62 erhaltenen Stromfluss I_{Steuer} entlang der zweiten Stromflussrichtung 28 in den zweiten Zustand zu steuern. Das bedeutet, gemäß dem Ausführungsbeispiel ist ein derartiges Signal bzw. der Stromfluss möglicherweise erforderlich. Optional, was jedoch mit zusätzlichen Komponenten verbunden ist, kann auch eine zusätzliche Kommunikationsvorrichtung vorgesehen sein, die ein Substitut für ein derartiges Signal übermittelt, so dass der Strom I_{Steuer} zwar auslösend für den Wechsel in den zweiten Zustand sein kann, aber in manchen Ausführungsbeispielen eine unter mehreren Möglichkeiten darstellt, während er in anderen Ausführungsbeispielen die einzige Möglichkeit darstellt. In Ausführungsbeispielen kann so eine elektronische Schaltung vorgesehen sein, die ohne eine weitere Kommunikationsschnittstelle ausgebildet ist, das heißt, kommunikationslos betrieben werden kann.

Gemäß einem Ausführungsbeispiel ist die Steuerungseinrichtung ausgebildet, um bei einem temporären Leistungseinbruch des PV-Moduls, etwa ausgehend vom Zustand Z4 in der Fig. 7 hin zum Zustand Z5, bezeichnet als längere Verschattungssituation, die Trennungseinrichtung 24 temporär in den ersten Zustand zu schalten. Nach einer Abschaltzeit, die bspw. als vordefinierter Zeitwert festgelegt, oder von einem anderes Ereignis abhängig ist, kann die Trennungseinrichtung unabhängig von dem über den String 62 erhaltenen Stromfluss I_{Steuer} entlang der zweiten Stromflussrichtung 28 in den zweiten Zustand gesteuert werden. Die Steuerungseinrichtung ist ausgebildet, um dann zu überprüfen, ob der temporäre Leistungseinbruch beendet ist. Wird erkannt, dass das Ende noch nicht eingetreten ist, so kann wieder in den ersten Zustand gewechselt werden. Die Zeitdauer ist gemäß einem Beispiel in der Fig. 7 erläutert und kann ca. 2.850 ms oder einen hiervon abweichenden Wert betragen. In der Tabelle ist die Ausgangslage für den Zustand Z4 mit "Aktiv" beschrieben, das bedeutet, die Entscheidung zum Zuschalten kann lokal in der Steuerungseinrichtung getroffen werden. Eine derartige probeweise dezentral initiierte Zuschaltung ist bspw. dann möglich, und ist möglicherweise aus Sicherheitsgründen auf solche Zustände beschränkt, wenn zuvor kein Kurzschluss oder Leerlauf erkannt wurde. In diesen Fällen kann die Steuerungseinrichtung ausgebildet sein, um sich in einen deaktivierten Zustand zu versetzen, in welchem sie möglicherweise ausschließlich durch den Puls in zweiter Stromflussrichtung, und/oder optionale externe Reset-Ereignisse reaktiviert und verbunden werden kann.

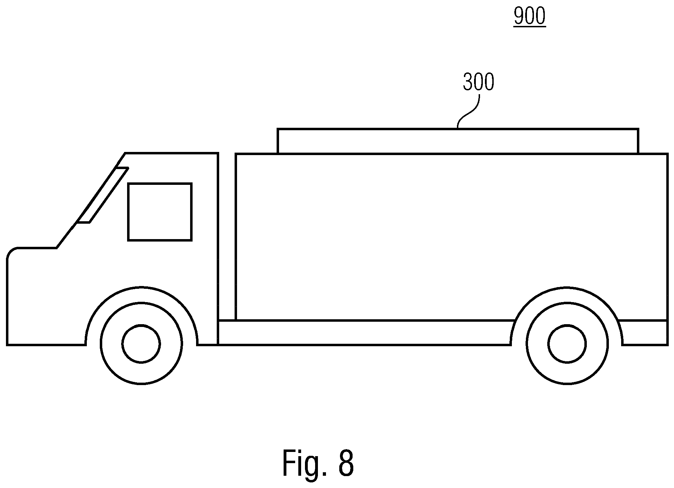

Fig. 8 zeigt eine schematische Seitenschnittdarstellung eines Fahrzeugs 900, beispielsweise einen LKW, das ein PV-System gemäß hierin beschriebener Ausführungsbeispiele umfasst, beispielsweise das PV-System 300. Alternativ zu einem LKW kann das Fahrzeug auch in Form eines beliebigen anderen Fahrzeugs gebildet sein, beispielsweise als ein Boot oder Schiff, ein Motorrad, ein PKW oder ein Luftfahrzeug, beispielsweise ein Zeppelin, ein motorloses oder motoraufweisendes Flugzeug, eine Drohne oder dergleichen.

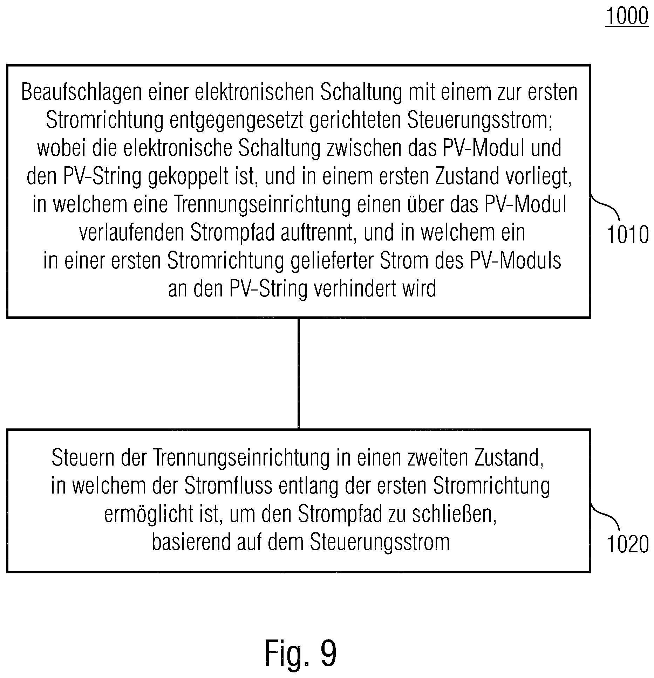

Fig. 9 zeigt ein schematisches Flussdiagramm eines Verfahrens 1000 gemäß einem Ausführungsbeispiel. Das Verfahren 1000 kann angewendet werden, um ein PV-Modul in einen PV-String zuzuschalten. Ein Schritt 1010 umfasst Beaufschlagen einer elektronischen Schaltung mit einem zur ersten Stromrichtung entgegengesetzt gerichteten Steuerungsstrom. Die elektronische Schaltung ist zwischen das PV-Modul und den PV-String gekoppelt und liegt in einem ersten Zustand vor, in welchem eine Trennungseinrichtung einen über das PV-Modul verlaufenden Strompfad auftrennt, und in welchem ein in einer ersten Stromrichtung gelieferter Strom des PV-Moduls an den PV-String verhindert wird. Ein Schritt 1020 umfasst ein Steuern der Trennungseinrichtung in einem zweiten Zustand, in welchem der Stromfluss entlang der ersten Stromrichtung ermöglicht ist, um den Strompfad zu schließen, basierend auf dem Steuerungsstrom.

Vorteilhaft an hierin beschriebenen Ausführungsbeispielen ist das kommunikationslose, das heißt ohne dezidierten Kommunikationskanal, Zuschalten und Trennen des PV-Moduls, um eine sichere Spannung von < 60 Volt im PV-Kreis zu erreichen. Die Trennung kann durch einen oder zwei oder mehr in Serie geschaltete MOSFETs erfolgen. Durch den Verzicht auf einen Kommunikationskanal oder eine Kommunikationsstrecke kann ein Ausführungsbeispiel günstig und dennoch zuverlässig implementiert werden. Dies schließt Ausführungsbeispiele mit einem zusätzlichen Kommunikationskanal beispielsweise für andere oder zusätzliche Anwendungen nicht aus.

Ausführungsbeispiele können im Bereich der fahrzeugintegrierten Photovoltaik eingesetzt werden. Darüber hinaus kann diese Lösung auch bei stationären Photovoltaik-Systemen eingesetzt werden, um die Sicherheit von PV-Installationen gegenüber bekannten Lösungen zu erhöhen. Ein sicherer Betrieb eines Hochvolt-PV-Systems ist gegebenenfalls ausschließlich mittels Trennung der Serienschaltung von PV-Modulen möglich. Die hier beschriebenen Konzepte ermöglichen eine kostengünstige Lösung, welche ohne zusätzlichen Kommunikationsaufwand auskommen kann.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Elektronische Schaltung für ein Photovoltaik-, PV-, Modul, umfassend:
PV-Anschlüsse (14₁, 14₂) zur Kopplung mit dem PV-Modul (12); und String-Anschlüsse (16₁, 16₂) zur Kopplung mit einem PV-String (62);
einen zwischen den PV-Anschlüssen (14₁, 14₂) und den String-Anschlüssen (16₁, 16₂) verlaufenden Strompfad (22), der ausgebildet ist, um einen in dem PV-Modul (12) erzeugten elektrischen Strom in einer ersten Stromflussrichtung (18) an den PV-String zu leiten;
einer zwischen einem ersten Anschluss der PV-Anschlüsse (14₁, 14₂) und einem zweiten Anschluss der String-Anschlüsse (16₁, 16₂) angeordneten Trennungseinrichtung (24), die ausgebildet ist, um den Strompfad (22) in einem ersten Zustand entlang der ersten Stromflussrichtung (18) zu unterbrechen; und um den Strompfad (22) in einem zweiten Zustand entlang der ersten Stromflussrichtung (18) zu schließen;
**dadurch gekennzeichnet, dass** die elektronische Schaltung eine Steuerungseinrichtung (26;34) umfasst, die ausgebildet ist, um eine Stromflussinformation über einen Stromfluss in zumindest einem Teilabschnitt des Strompfades (22) entlang einer zur ersten Stromflussrichtung (18) entgegengesetzten zweiten Stromflussrichtung (28) zu erhalten; und um basierend auf der Stromflussinformation die Trennungseinrichtung (24) von dem ersten Zustand in den zweiten Zustand zu steuern.

2. Elektronische Schaltung gemäß Anspruch 1, bei der die Trennungseinrichtung (24) ausgebildet ist, um die Stromflussinformation aus einem Impuls in zweiter Stromflussrichtung zu erhalten.

3. Elektronische Schaltung gemäß Anspruch 1 oder 2, die ausgebildet ist um über den String vermittels des Stromflusses entlang der zweiten Stromflussrichtung einen Impuls zu erhalten, der die Stromflussinformation anzeigt, um in den zweiten Zustand zu wechseln.

4. Elektronische Schaltung gemäß einem der vorangehenden Ansprüche, bei der die Trennungseinrichtung (24) einen Halbleiterschalter (36₁, 36₂) mit einem schaltbaren Strompfad (22) und einer parallel zu dem schaltbaren Strompfad (22) wirkenden Diode (38₁, 38₂) umfasst, wobei die Trennungseinrichtung (24) ausgebildet ist, um in dem ersten Zustand der Trennungseinrichtung (24) den Stromfluss über die Diode (38₁, 38₂) entlang der zweiten Stromflussrichtung (28) zu leiten.

5. Elektronische Schaltung gemäß einem der vorangehenden Ansprüche, bei der die Trennungseinrichtung (24) zumindest einen ersten und einen zweiten seriell oder parallel verschalteten Halbleiterschalter (36₁, 36₂) mit entlang der zweiten Stromflussrichtung (28) wirkenden Dioden (38₁, 38₂) umfasst.

6. Elektronische Schaltung gemäß einem der vorangehenden Ansprüche, mit einer Sensoreinrichtung (44), die ausgebildet ist, um einen Stromfluss entlang der zweiten Stromflussrichtung zu erkennen; wobei die Stromflussinformation auf dem erkannten Stromfluss basiert.

7. Elektronische Schaltung gemäß einem der vorangehenden Ansprüche, bei der die Steuerungseinrichtung (26; 34) ausgebildet ist, um die Trennungseinrichtung (24) von dem zweiten Zustand basierend auf einem Abschaltereignis in den in den ersten Zustand zu steuern.

8. Elektronische Schaltung gemäß einem der vorangehenden Ansprüche, bei der die Steuerungseinrichtung (26; 34) ausgebildet ist, um bei einem temporären Leistungseinbruch des PV-Moduls (12) die Trennungseinrichtung (24) temporär in den ersten Zustand zu schalten, und anschließend unabhängig von dem über den PV-String (62) erhaltenen Stromfluss (I_{Steuer}) entlang der zweiten Stromflussrichtung (28) wieder in den zweiten Zustand zu steuern, um zu prüfen, ob ein die Abschaltung verursachender temporärer Leistungseinbruch beendet ist.

9. Elektronische Schaltung gemäß einem der vorangehenden Ansprüche, die ohne eine Kommunikationsschnittstelle ausgebildet ist.

10. Elektronische Schaltung gemäß einem der vorangehenden Ansprüche, mit einer Sensoreinrichtung (44), die ausgebildet ist, um einen Stromfluss entlang der zweiten Stromflussrichtung zu erkennen; wobei die Stromflussinformation auf dem erkannten Stromfluss basiert;
wobei die Sensoreinrichtung (44) ausgebildet ist, um einen Spannungsabfall über einer parallel zu einem Schalter der Trennungseinrichtung wirkenden Diode zu detektieren, wobei der Spannungsabfall mit dem Stromfluss kausal zusammenhängt;
wobei die Steuerungseinrichtung (26; 34) ausgebildet ist, um bei einem temporären Leistungseinbruch des PV-Moduls (12) die Trennungseinrichtung (24) temporär in den ersten Zustand zu schalten, und anschließend unabhängig von dem über den PV-String (62) erhaltenen Stromfluss (I_{Steuer}) entlang der zweiten Stromflussrichtung (28) wieder in den zweiten Zustand zu steuern, um zu prüfen, ob ein die Abschaltung verursachender temporärer Leistungseinbruch beendet ist.

11. Photovoltaik-Baugruppe (200) mit:
einem PV-Modul (12); und
einer mit dem PV-Modul (12) gekoppelten elektronischen Schaltung (10; 20) gemäß einem der vorangehenden Ansprüche.

12. PV-System (300) mit:
einer Mehrzahl von seriell in einem PV-String (62) verschalteten PV-Baugruppen (200) gemäß Anspruch 11;
einem mit dem PV-String gekoppelten elektrischen Spannungswandler (66), der ausgebildet ist, um eine auf dem Stromfluss (I_{PV}) in der ersten Stromflussrichtung (18) basierende elektrische Spannung (U_{PV}) zu erhalten und zu wandeln; und
eine Quelle (78) zum Anlegen des Stromflusses (I_{Steuer}) in die zweite Stromflussrichtung (28);
wobei der Spannungswandler (66) ausgebildet ist, um die Quelle (78) zu steuern, um zumindest eine PV-Baugruppe (200) in dem PV-String (62) zuzuschalten.

13. PV-System gemäß Anspruch 12, bei dem die Quelle (78) ausgebildet ist, um den Strom (I_{Steuer}) entlang der zweiten Stromflussrichtung (28) als Gleichstrom bereitzustellen.

14. Fahrzeug (900) mit einem PV-System (300) gemäß Anspruch 12 oder 13.

15. Verfahren (1000) zum Zuschalten eines Photovoltaik-, PV-, Moduls in einen PV-String mit folgenden Schritten:
Beaufschlagen (1010) einer elektronischen Schaltung mit einem zur ersten Stromrichtung entgegengesetzt gerichteten Steuerungsstrom; wobei die elektronische Schaltung zwischen das PV-Modul und den PV-String gekoppelt ist, und in einem ersten Zustand vorliegt, in welchem eine Trennungseinrichtung einen über das PV-Modul verlaufenden Strompfad auftrennt, und in welchem ein in einer ersten Stromrichtung gelieferter Strom des PV-Moduls an den PV-String verhindert wird;
Steuern (1020) der Trennungseinrichtung in einen zweiten Zustand, in welchem der Stromfluss entlang der ersten Stromrichtung ermöglicht ist, um den Strompfad zu schließen, basierend auf dem Steuerungsstrom.

## Claims

1. Electronic circuit for a photovoltaic, PV, module, comprising:
PV terminals (14₁, 14₂) for coupling to the PV module (12); and string terminals (16₁, 16₂) for coupling to a PV string (62);
a current path (22) running between the PV terminals (14₁, 14₂) and the string terminals (16₁, 16₂), which current path (22) is configured to conduct an electric current generated in the PV module (12) in a first current flow direction (18) to the PV string;
a disconnector (24) arranged between a first terminal of the PV terminals (14₁, 14₂) and a second terminal of the string terminals (16₁, 16₂), which disconnector (24) is configured to interrupt the current path (22) in a first state along the first current flow direction (18); and to close the current path (22) in a second state along the first current flow direction (18);
**characterized in that** the electronic circuit includes a controller (26; 34) which is configured to acquire current flow information about a current flow in at least one sub-portion of the current path (22) along a second current flow direction (28) opposite to the first current flow direction (18); and to control the disconnector (24) from the first state into the second state based on the current flow information.

2. Electronic circuit according to claim 1, wherein the disconnector (24) is configured to acquire the current flow information from a pulse in the second current flow direction.

3. Electronic circuit according to claim 1 or 2, which is configured to acquire a pulse via the string by means of the current flow along the second current flow direction, which pulse indicates the current flow information, in order to change into the second state.

4. Electronic circuit according to one of the preceding claims, wherein the disconnector (24) comprises a semiconductor switch (36₁, 36₂) with a switchable current path (22) and a diode (38₁, 38₂) acting in parallel with the switchable current path (22), wherein the disconnector (24) is configured to conduct, in the first state of the disconnector (24), the current flow via the diode (38₁, 38₂) along the second current flow direction (28).

5. Electronic circuit according to one of the preceding claims, wherein the disconnector (24) comprises at least a first and a second semiconductor switch (36₁, 36₂), which are connected to one another in series or in parallel, with diodes (38₁, 38₂) acting along the second current flow direction (28).

6. Electronic circuit according to one of the preceding claims comprising a sensor means (44) which is configured to recognize a current flow along the second current flow direction; wherein the current flow information is based on the recognized current flow.

7. Electronic circuit according to one of the preceding claims, wherein the controller (26; 34) is configured to control the disconnector (24) from the second state into the first state based on a switch-off event.

8. Electronic circuit according to one of the preceding claims, wherein the controller (26; 34) is configured to temporarily switch the disconnector (24) into the first state upon a temporary power setback of the PV module (12), and to subsequently control it back into the second state independently of the current flow (I_{Steuer}), acquired via the PV string (62), along the second current flow direction (28) to check whether a temporary power setback causing the switch-off has ended.

9. Electronic circuit according to one of the preceding claims, which is configured without a communication interface.

10. Electronic circuit according to one of the preceding claims, having a sensor means (44), which is configured to recognize a current flow along the second current flow direction; wherein the current flow information is based on the recognized current flow;
wherein the sensor means (44) is configured to detect a voltage drop over a diode acting in parallel with a switch of the disconnector, wherein the voltage drop is causally related to the current flow;
wherein the controller (26; 34) is configured to temporarily switch the disconnector (24) into the first state upon a temporary power setback of the PV module (12), and to subsequently control it back into the second state independently of the current flow (I_{Steuer}), acquired via the PV string (62), along the second current flow direction (28) to check whether a temporary power setback causing the switch-off has ended.

11. Photovoltaic assembly (200) having:
a PV module (12); and
an electronic circuit (10; 20) coupled to the PV module (12) according to one of the preceding claims.

12. PV system (300) having:
a plurality of PV assemblies (200) according to claim 11, serially connected in a PV string (62);
an electric voltage converter (66) coupled to the PV string, which is configured to acquire and convert an electric voltage (U_{PV}) based on the current flow (I_{PV}) in the first current flow direction (18); and
a source (78) for applying the current flow (I_{Steuer}) in the second current flow direction (28);
wherein the voltage converter (66) is configured to control the source (78) to switch at least one PV assembly (200) into the PV string (62).

13. PV system according to claim 12, wherein the source (78) is configured to provide the current (I_{Steuer}) along the second current flow direction (28) as a direct current.

14. Vehicle (900) having a PV system (300) according to claim12 or 13.

15. Method (1000) for switching a photovoltaic, PV, module into a PV string, comprising the following steps:
providing (1010) an electronic circuit with a control current directed opposite to the first current direction; wherein the electronic circuit is coupled between the PV module and the PV string and is present in a first state, in which a disconnector disconnects a current path running across the PV module, and in which a current of the PV module delivered in a first current direction to the PV string is prevented;
controlling (1020) the disconnector into a second state, in which the current flow along the first current direction is enabled to close the current path based on the control current.

## Revendications

1. Circuit électronique pour un module photovoltaïque, PV, comprenant :
des connexions PV (14₁, 14₂) pour le couplage au module PV (12) ; et des connexions de chaîne (16₁, 16₂) pour le couplage à une chaîne PV (62) ;
un chemin de courant (22) s'étendant entre les connexions PV (14₁, 14₂) et les connexions de chaîne (16₁, 16₂), qui est conçu pour conduire vers la chaîne PV dans une première direction de circulation de courant (18) un courant électrique généré dans le module PV (12) ;
un moyen de séparation (24) disposé entre une première connexion parmi les connexions PV (14₁, 14₂) et une seconde connexion parmi les connexions de chaîne (16₁, 16₂) et qui est conçu pour interrompre le chemin de courant (22) dans un premier état le long de la première direction de circulation de courant (18) ; et pour fermer le chemin de courant (22) dans un second état le long de la première direction de circulation de courant (18) ;
**caractérisé en ce que** le circuit électronique comprend un moyen de commande (26 ; 34) qui est conçu pour obtenir des informations de circulation de courant relatives à une circulation de courant dans au moins une section partielle du chemin de courant (22) le long d'une seconde direction de circulation de courant (28) opposée à la première direction de circulation de courant (18) ; et sur base des informations de circulation de courant pour commander le moyen de séparation (24) pour passer du premier état dans le second état.

2. Circuit électronique selon la revendication 1, dans lequel le moyen de séparation (24) est conçu pour obtenir les informations de circulation de courant à partir d'une impulsion dans la seconde direction de circulation de courant.

3. Circuit électronique selon la revendication 1 ou 2, qui est conçu pour obtenir, par le biais de la chaîne par l'intermédiaire de la circulation du courant le long de la seconde direction de circulation de courant, une impulsion qui donne les informations de circulation de courant pour passer dans le second état.

4. Circuit électronique selon l'une des revendications précédentes, dans lequel le moyen de séparation (24) comprend un commutateur à semi-conducteur (36₁, 36₂) avec un chemin de courant commutable (22) et une diode (38₁, 38₂) agissant en parallèle avec le chemin de courant commutable (22), le moyen de séparation (24) étant conçu, dans le premier état du moyen de séparation (24), pour conduire la circulation de courant par le biais de la diode (38₁, 38₂) le long de la seconde direction de circulation de courant (28).

5. Circuit électronique selon l'une des revendications précédentes, dans lequel le moyen de séparation (24) comprend au moins un premier et un second commutateurs à semi-conducteur (36₁, 36₂) connectés en série ou en parallèle avec des diodes (38₁, 38₂) agissant le long de la seconde direction de circulation de courant (28).

6. Circuit électronique selon l'une des revendications précédentes, avec un moyen de capteur (44) qui est conçu pour reconnaître une circulation de courant le long de la seconde direction de circulation de courant ; dans lequel les informations de circulation de courant se basent sur la circulation de courant reconnue.

7. Circuit électronique selon l'une des revendications précédentes, dans lequel le moyen de commande (26 ; 34) est conçu pour commander le moyen de séparation (24) pour passer du second état dans le premier état sur base d'un événement de coupure.

8. Circuit électronique selon l'une des revendications précédentes, dans lequel le moyen de commande (26 ; 34) est conçu, dans le cas d'une baisse de puissance temporaire du module PV (12), pour commuter le moyen de séparation (24) temporairement dans le premier état, puis commander de nouveau le passage dans le second état indépendamment de la circulation de courant (I_{Steuer}) obtenue par le biais de la chaîne PV (62) le long de la seconde direction de circulation de courant (28) afin de vérifier si une baisse de puissance temporaire provoquant la coupure est terminée.

9. Circuit électronique selon l'une des revendications précédentes, qui est conçu sans interface de communication.

10. Circuit électronique selon l'une des revendications précédentes, avec un moyen de capteur (44), qui est conçu pour reconnaître une circulation de courant le long de la seconde direction de circulation de courant ; dans lequel les informations de circulation de courant se basent sur la circulation de courant reconnue ;
dans lequel le moyen de capteur (44) est conçu pour détecter une chute de tension par le biais d'une diode agissant parallèlement à un commutateur du moyen de séparation, la chute de tension étant en relation de manière causale avec la circulation de courant ;
dans lequel le moyen de commande (26 ; 34) est conçu, dans le cas d'une baisse de puissance temporaire du module PV (12), pour commuter le moyen de séparation (24) temporairement dans le premier état, puis commander de nouveau le passage dans le second état, indépendamment de la circulation de courant (I_{Steuer}) obtenue par le biais de la chaîne PV (62) le long de la seconde direction de circulation de courant (28), afin de vérifier si une baisse de puissance provoquant la coupure est terminée.

11. Ensemble photovoltaïque (200) avec :
un module PV (12) ; et
un circuit électronique (10 ; 20) selon l'une des revendications précédentes, couplé au module PV (12).

12. Système PV (300) avec :
une pluralité d'ensembles PV (200) selon la revendication 11 connectés en série dans une chaîne PV (62) ;
un convertisseur de tension électrique (66) couplé à la chaîne PV qui est conçu pour obtenir et convertir une tension électrique (U_{PV}) sur base de la circulation de courant (I_{PV}) dans la première direction de circulation de courant (18) ; et
une source (78) destinée à appliquer la circulation de courant (I_{Steuer}) dans la seconde direction de circulation de courant (28) ;
dans lequel le convertisseur de tension (66) est conçu pour commander la source (78) afin de connecter au moins un ensemble PV (200) dans la chaîne PV (62).

13. Système PV selon la revendication 12, dans lequel la source (78) est conçue pour fournir le courant (I_{Steuer}) le long de la seconde direction de circulation de courant (28) sous forme de courant continu.

14. Véhicule (900) avec un système PV (300) selon la revendication 12 ou 13.

15. Procédé (1000) destiné à connecter un module photovoltaïque, PV, dans une chaîne PV avec les étapes suivantes :
alimenter (1010) un circuit électronique avec une circulation de commande dirigée à l'opposé de la première direction de courant ; dans lequel le circuit électronique est couplé entre le module PV et la chaîne PV et se trouve dans un premier état dans lequel un moyen de séparation sépare un chemin de courant s'étendant à travers le module PV et dans lequel un courant fourni dans une première direction de courant par le module PV vers la chaîne PV est empêché ;
commander (1020) le moyen de séparation dans un second état dans lequel la circulation de courant de la première direction de courant est autorisée pour fermer le chemin de courant sur base du courant de commande.
